Europäisches Patentamt

**European Patent Office**

**Office européen des brevets**

(19)

(11) Numéro de publication: **0 165 880**
**B1**

(12)

# FASCICULE DE BREVET EUROPÉEN

(45) Date de publication du fascicule du brevet:
**23.11.88**

(51) Int. Cl.⁴: **C 09 D 3/12,** E 04 F 13/00

(21) Numéro de dépôt: **85420079.7**

(22) Date de dépôt: **02.05.85**

(54) **Composition fibreuse utilisable comme liant dans la fabrication de revêtements décoratifs intérieurs.**

(30) Priorité: **04.05.84 FR 8407526**

(43) Date de publication de la demande:
**27.12.85 Bulletin 85/52**

(45) Mention de la délivrance du brevet:
**23.11.88 Bulletin 88/47**

(84) Etats contractants désignés:
**AT BE CH DE GB IT LI LU NL SE**

(56) Documents cité:
**EP-A-0 091 529**
**FR-A-582 838**
**FR-A-983 642**
**FR-A-2 450 860**
**US-A-4 240 936**

(73) Titulaire: **Laurent, Alain, 40, rue du Vieux Port,**
**F-69540 Irigny (FR)**
Titulaire: **Dubois, Bernard, 6, Quai Fulchiron,**
**F-69005 Lyon (FR)**

(72) Inventeur: **Laurent, Alain, 40, rue du Vieux Port,**
**F-69540 Irigny (FR)**
Inventeur: **Dubois, Bernard, 6, Quai Fulchiron,**
**F-69005 Lyon (FR)**

(74) Mandataire: **Maureau, Philippe, Cabinet Germain**
**& Maureau Le Britannia - Tour C 20, bld**
**Eugène Déruelle Boîte Postale 3011, F-69392 Lyon**
**Cédex 03 (FR)**

EP 0 165 880 B1

**0 165 880**

## Description

La présente invention a pour objet une composition fibreuse utilisable comme liant dans la fabrication de revêtements décoratifs intérieurs.

Il est connu de réaliser des liants servant de base à la fabrication de revêtements décoratifs, contenant des fibres de cellulose leur conférant de bonnes propriétés mécaniques. Ces fibres de cellulose sont mélangées à des liants cellulosiques ainsi qu'à des polymères et à des charges minérales dont la nature et les proportions sont fonction de l'application envisagée. De telles bases pour revêtements décoratifs présentent toutefois l'inconvénient d'être d'un prix de revient très élevé.

Le document EP-A-0 091 529 décrit un procédé de fabrication de produits souples pour les revêtements, l'isolation et l'emballage se présentant sous forme de feuilles continues ou de panneaux. Ce procédé met en oeuvre, à l'aide de machines de papeterie, des boues de papeterie, du latex, des charges minérales ou organiques, et un agent de réticulation.

Le document US-A-4 290 936 concerne une composition isolante comprenant essentiellement du kaolin et des fibres obtenues à partir de déchets de papier ou de journaux déchiquetés, le kaolin représentant 30 à 90 % en poids du mélange.

Le but de l'invention est de fournir une composition fibreuse utilisable comme liant pour la fabrication de revêtements décoratifs intérieurs pouvant, une fois sec, être enlevé par mouillage, qui soit simple à réaliser et d'un prix de revient économique.

A cet effet, cette composition comprend:

- des boues papetières contenant de 5 à 20 % de matières sèches constituées par au moins 40 % en poids de fibres de cellulose,
- des fibres de cellulose de plus grande longueur que celles contenues dans les boues, et/ou des fibres synthétiques, et/ou des fibres minérales,
- un polymère filmogène, dans la proportion de 1 % du poids total de la composition, facilitant l'agglomération des fibres cellulosiques et des fibres synthétiques et procurant un caractère adhésif à la composition, et
- un agent bactéricide.

Cette technique est très intéressante car permettant une réutilisation de produits généralement traités comme des déchets et un abaissement du prix de revient des liants fibreux servant de base à la fabrication de revêtements décoratifs.

Selon la teneur en fibres des boues papetières, les fibres ajoutées sont des fibres de cellulose de plus grande longueur que celles présentes dans les boues, des fibres synthétiques telles que fibres de polyoléfine telle que polyéthylène, polypropylène ou de polyamide; des fibres minérales (laine de roche) celles-ci pouvant être incorporées en toutes proportions, selon l'utilisation finale du liant fibreux.

Les polymères filmogènes sont des polymères naturels et/ou synthétiques, solubles, émulsionnables ou dispersibles dans l'eau. Il peut s'agir de polymères dérivés de la cellulose, non-ioniques ou anioniques, de dispersion de composés de types vinyliques et/ou acryliques et leurs dérivés en milieu aqueux, des alcools polyvinyliques, des polymères dérivés de la cellulose, ou d'une combinaison de ces polymères.

La composition selon l'invention peut également, selon sa destination, contenir des fibres de laine de roche, de la farine de bois, de la perlite, de la vermiculite, des micro-ballons de verre ou des agents ignifugeants lui conférant des qualités particulières.

Afin de procurer à la préparation des qualités de résistances aux moisissures, champignons et aux insectes volants ou rampants, cette composition peut contenir des agents antifongiques et insecticides.

Conformément à un mode de réalisation de cette composition, un agent moussant lui est ajouté afin de provoquer la formation de bulles d'air lors de la projection du produit sous pression. L'allègement ainsi obtenu pour le produit améliore les qualités thermiques et acoustiques du revêtement.

Conformément à une variante, l'agent moussant est incorporé au moment de la dilution de la pâte, juste avant application de celle-ci.

Un procédé d'obtention de cette composition consiste à partir de boues papetières avant concentration et dessication partielle lorsqu'elles sont pompables et contiennent de 5 à 20 % de matières sèches, et à disperser dans cette suspension les fibres et polymères solubles et/ou dispersibles apportés en complément, avant de réaliser une agitation pendant 30 minutes environ permettant l'obtention d'une pâte lisse et homogène qui constitue le liant fibreux.

Un autre procédé de préparation de la composition selon l'invention consiste à partir d'un extrait de boues papetières contenant environ 50 % de matières sèches, à disperser cet extrait dans l'eau sous forte agitation, puis à ajouter à cette dispersion les fibres apportées en complément et les polymères solubles et/ou dispersibles avant d'obtenir une pâte lisse et homogène après une période d'agitation de 30 minutes environ.

La composition selon l'invention peut être appliquée sur son support à l'aide de dispositifs usuels tels que rouleaux, pistolet basse pression..., après que lui aient été ajoutés des pigments et des charges en quantité suffisante, selon le décor et le but technique recherchés.

Cette composition présente l'avantage de pouvoir être enlevée, par simple imprégnation à l'eau chaude ou à la vapeur, si le polymère utilisé est un dérivé de la cellulose ou est essentiellement constitué d'un dérivé de la

2

cellulose.

Les exemples ci-après décrivent, à titre non limitatifs, plusieurs possibilités de réalisation de compositions selon l'invention:

**Exemple 1**

| | En poids |
|---|---|
| Boues (15% extrait sec) | 80 |
| Fibres de cellulose | 1 |
| Methylcellulose | 1 |
| Bactericide | 0,5 |
| Eau | 18 |
| | 100,5 |

On introduit dans une cuve les boues, les fibres, le bactéricide, sous agitation, on ajoute la méthylcellulose. Après 30 minutes, on obtient une pâte lisse et homogène, à laquelle on ajoute sous agitation modérée le complément d'eau. La composition fibreuse est prête à l'utilisation.

**Exemple 2**

| | Parties en poids |
|---|---|
| Liant fibreux selon l'exemple 1 | 150 |
| hydroxymethylcellulose | 2 |
| oxyde de titane | 2 |
| talc | 25 |
| carbonate de calcium 15 microns | 120 |
| anti-fongique | 1 |
| | 300 |

Les produits sont mélangés de façon homogène au liant fibreux jusqu'à obtention d'une pâte consistante. Le produit peut être dilué avant application, et donne un crépi rustique intérieur. Ce revêtement peut être coloré dans la masse à l'aide d'oxydes de fer et/ou de pigments organiques.

**Exemple 3**

| | Parties en poids |
|---|---|
| liant fibreux selon l'exemple 1 | 200 |
| carboxymethylcellulose | 3 |
| fibres de cellulose | 2 |
| farine de bois | 8 |
| oxyde de titane | 5 |
| talc | 25 |
| carbonate de calcium 15 microns | 70 |
| vermiculite | 10 |
| anti-fongique | 1 |
| | 324 |

On obtient par incorporation des éléments ci-dessus, au liant fibreux, un revêtement décoratif ayant des qualités de récupération acoustique intéressantes.

**Exemple 4**

|  | Parties en poids |
|---|---|
| liant fibreux selon l'exemple 1 | 100 |
| fibres de polypropylène | 2 |
| hydroxyethylcellulose | 2 |
| oxyde de titane | 6 |
| eau | 18 |
| laurylethersulfate | 2 |
| laine de roche | 80 |
|  | 210 |

En incorporant les éléments ci-dessus, au liant fibreux, on obtient un revêtement qui peut être appliqué en forte épaisseur (30 millimètres) et possède des caractéristiques acoustiques intéressantes, du fait du "gonflant" apporté par la fibre de polypropylène et de l'inclusion de bulles d'air dues au lauryléthersulfate lors de la projection de la pâte.

**Exemple 5**

|  | Parties en poids |
|---|---|
| liant fibreux selon l'exemple 1 | 200 |
| fibres de cellulose | 1 |
| hydroxyethylcellulose | 5 |
| dispersion vinylique | 25 |
| vermiculite | 27 |
| oxyde de titane | 5 |
| kaolin | 100 |
| carbonate de calcium 15 microns | 400 |
| anti-fongique | 2 |
| eau | 235 |
|  | 1000 |

On obtient en mélangeant les produits ci-dessus au liant fibreux de l'Exemple 1, un revêtement possédant d'excellentes qualités d'accrochage sur tout support et ayant un effet décoratif du fait de la présence de grains grossiers dans le film.

**Exemple 6**

|  | Parties en poids |
|---|---|
| liant fibreux selon l'exemple 1 | 150 |
| fibres de cellulose | 1 |
| alcool polyvinylique | 5 |
| kaolin | 10 |
| carbonate de calcium 15 microns | 130 |
| anti-fongique | 1 |
| agent insecticide | 3 |
|  | 300 |

Par incorporation d'un agent insecticide rèmanent non soluble en milieu aqueux, on obtient un revêtement intérieur décoratif présentant des qualités insecticides contre les insectes volants (mouches, moustiques) et rampants (araignées).

De la même façon, on peut introduire dans la formule de l'Exemple 4, un ou plusieurs agents ignifugeants, (substances halogénées ou phosphorées, oxyde d'antimoine, dérivés de l'acide borique) qui confèrent au revêtement épais des qualités de retardateur à la propagation du feu intéressantes.

Comme il ressort de ce qui précède, l'invention apporte une grande amélioration à la technique existante en fournissant une composition très performante, et d'un prix de revient modéré compte tenu de la mise en oeuvre dans des proportions importantes de produits (de 20 à 80 % de la masse totale), considérés et traités jusqu'alors comme des déchets.

**Revendications**

1. Composition fibreuse se présentant sous forme de pâte homogène utilisée comme liant pour la fabrication de revêtements décoratifs muraux pouvant être projetés, appliqués au rouleau ou à la brosse sur une surface, caractérisée en ce qu'elle comprend:

- des boues papetières contenant de 5 à 20 % de matières sèches constituées par au moins 40 % en poids de fibres de cellulose,
- des fibres de cellulose de plus grande longueur que celles contenues dans les boues, et/ou des fibres synthétiques, et/ou des fibres minérales,
- un polymère filmogène dans la proportion de 1 % du poids total de la composition, facilitant l'agglomération des fibres cellulosiques et des fibres synthétiques et procurant un caractère adhésif à la composition, et
- un agent bactéricide.

2. Composition selon la revendication 1, caractérisée en ce que les fibres synthétiques sont choisies parmi les fibres de polyoléfines ou de polyamides.

3. Composition selon l'une quelconque des revendications 1 et 2, caractérisée en ce que les fibres minérales sont des fibres de laine de roche.

4. Composition selon l'une quelconque des revendications 1 à 3, caractérisée en ce que le polymère filmogène est constitué par une dispersion de composés de types vinyliques et/ou acryliques en milieu aqueux.

5. Composition selon l'une quelconque des revendications 1 à 3, caractérisée en ce que le polymère filmogène est constitué par un alcool polyvinylique.

6. Composition selon l'une quelconque des revendications 1 à 5, caractérisée en ce qu'elle contient une ou plusieurs substances, ou charges ignifugeantes.

7. Composition selon l'une quelconque des revendications 1 à 6, caractérisée en ce qu'elle contient des agents lui conférant des propriétés protectrices, tels que des agents antifongiques et insecticides.

**Patentansprüche**

1. Faserige Zusammensetzung in Form eines homogenen Breies, der als Bindemittel zur Herstellung von dekorativen Wandverkleidungen verwendet wird und der auf eine Oberfläche aufgeworfen oder mittels Rollen oder Bürsten aufgebracht werden kann,
gekennzeichnet durch
einen Gehalt an

- Papieraufschlämmungen, die 5 bis 20 % Trockenmasse enthalten und die mindestens aus 40 Gew.-% Cellulosefasern bestehen,
- Fasern aus Cellulose, die länger sind als diejenigen in den Aufschlämmungen, und/oder synthetische Fasern und/oder mineralische Fasern,
- und 1 Gew.-% eines filmbildenden Polymers, bezogen auf die gesamte Zusammensetzung, welches die Agglomeration der Cellulose enthaltenden Fasern und der synthetischen Fasern erleichtert und das der Zusammensetzung adhäsive Eigenschaften verleiht und
-ein bakterizides Mittel.

2. Zusammensetzung nach Anspruch 1, dadurch gekennzeichnet, daß die synthetischen Fasern Polyolefin- oder Polyamidfasern sind.

3. Zusammensetzung nach einem der vorhergehenden Ansprüche, dadurch gekennzeichnet, daß die mineralischen Fasern Gesteinsfasern sind.

4. Zusammensetzung nach einem der vorhergehenden Anprüche, dadurch gekennzeichnet, daß das filmbildende Polymer aus einer Dispersion von Verbindungen des Vinyl- und/oder Acryltyps im wäßrigen Milieu gebildet wird.

5. Zusammensetzung nach einem der Ansprüche 1 bis 3, dadurch gekennzeichnet, daß das filmbildende Polymer aus einem Polyvinylalkohol gebildet wird.

6. Zusammensetzung nach einem der vorhergehenden Ansprüche, dadurch gekennzeichnet, daß sie ein oder mehrere Feuerschutzmittel enthält.

7. Zusammensetzung nach einem der vorhergehenden Ansprüche, dadurch gekennzeichnet, daß sie solche Mittel wie Fungizide und Insektizide enthält, die ihr protective Eigenschaften verleihen.

**Claims**

1. Fibrous composition in the form of an homogenous paste used as a binder for the manufacture of decorative wall coverings capable of being sprayed on, applied by means of a roller or a brush to a surface, characterised in that it comprises:

- paper-making slurry containing 5 to 20 % dry matter and consisting of at least 40 % by weight of cellulose fibres,
- cellulose fibres of greater length than those contained in the slurry and/or synthetic fibres and/or mineral fibres,
- a filmogenic polymer in a proportion of 1 % of the total weight of the composition facilitating agglomeration of the cellulose fibres and synthetic fibres and imparting an adhesive nature to the composition, and
- a bactericidal agent.

2. A composition according to Claim 1, characterised in that the synthetic fibres are chosen from among the polyolefin or polyamide fibres.

3. A composition according to any one of Claims 1 and 2, characterized in that the mineral fibres are rock wool fibres.

4. A composition according to any one of Claims 1 to 3, characterised in that the filmogenic polymer is constituted by a dispersion of vinyl and/or acrylic compounds in an aqueous medium.

5. A composition according to any one of Claims 1 to 3, characterised in that the filmogenic polymer is constituted by a polyvinyl alcohol.

6. A composition according to any one of Claims 1 to 5, characterized in that it means one or a plurality of flame-retarding substances or fillers.

7. A composition according to any one of Claims 1 to 6, characterised in that it contains agents which give it protective properties such as anti-fungal and insecticidal agents.